# EUROPÄISCHE PATENTSCHRIFT

(11) **EP 2 663 424 B1**
(45) Veröffentlichungstag und Bekanntmachung des Hinweises auf die Patenterteilung: **24.01.2018**
(21) Anmeldenummer: 11804919.6
(22) Anmeldetag: 21.07.2011
(51) Int. Cl.: B23P 19/04, E06B 7/16, E05B 85/02, E05B 77/34, B05D 3/06, B05D 3/02, E05B 15/16

(54) **VERFAHREN ZUM AUFBRINGEN EINER DICHTUNG AUF EINE OBERFLÄCHE EINES GERÄTEGEHÄUSES FÜR EIN KRAFTFAHRZEUG**
METHOD FOR APPLYING A SEAL TO A SURFACE OF A DEVICE HOUSING FOR A MOTOR VEHICLE
PROCÉDÉ POUR APPLIQUER UNE GARNITURE D'ÉTANCHÉITÉ SUR UNE SURFACE D'UN BOÎTIER D'APPAREIL POUR UN VÉHICULE AUTOMOBILE

(30) Priorität: 29.07.2010 DE 102010032744
(43) Veröffentlichungstag der Anmeldung: 20.11.2013
(73) Patentinhaber: Kiekert Aktiengesellschaft, 42579 Heiligenhaus (DE)
(72) Erfinder: RASCHEGEWSKI, Peter, 42579 Heiligenhaus (DE); HANDKE, Armin, 47269 Duisburg (DE); SOHLBACH, Andreas, 45481 Mülheim (DE); OCHTROP, Matthias, 46284 Dorsten (DE)
(74) Vertreter: Nunnenkamp, Jörg
(86) Internationale Anmeldenummer: PCT/DE2011/001502
(87) Internationale Veröffentlichungsnummer: WO 2012/013184

(56) Entgegenhaltungen:
- EP-A2- 1 331 080
- DE-A1- 10 020 679
- DE-A1- 19 808 573
- DE-A1-102006 003 940
- DE-A1-102008 039 460
- US-A1- 2009 033 104
- US-B1- 6 422 619

## Beschreibung

Die Erfindung betrifft ein Verfahren zum Aufbringen einer Dichtung auf eine Oberfläche eines Gerätegehäuses für ein Kraftfahrzeug. - Bei dem fraglichen Gerätegehäuse handelt es sich meistens um ein Kraftfahrzeugtürverschluss-Gehäuse. Folgerichtig betrifft die Erfindung regelmäßig das Aufbringen einer Dichtung auf eine Kraftfahrzeugtürverschluss-Gehäuseoberfläche.

Gerätegehäuse für Kraftfahrzeuge dienen beispielsweise zur Aufnahme von Steuerungen, Motoren, Fensterhebereinrichtungen, Kraftfahrzeugtürverschlüssen, Schließzylindern, Fernbedienungen etc.. Sämtlichen Gerätegehäusen ist gemein, dass diese regelmäßig dicht und dauerhaft verschlossen werden müssen. Denn in einem Kraftfahrzeug kann das Eindringen von Wasser, Schmutz etc. nicht zuverlässig und dauerhaft ausgeschlossen werden. Aus diesem Grund kommt dem Schutz der im Innern des Gerätegehäuses befindlichen Aggregate eine besondere Bedeutung zu.

Darüber hinaus dienen solche Gerätegehäuse zusätzlich oder alternativ zur Abdichtung von Öffnungen in einer Karosserie, wie dies beispielsweise bei Kraftfahrzeugtürverschluss-Gehäusen der Fall ist. Tatsächlich werden solche Kraftfahrzeugtürverschiuss-Gehäuse meistens im Bereich einer Ausnehmung oder Aussparung im Innern einer Seitentür, einer Heckklappe etc. platziert. Die Aussparung ist erforderlich, um einem beispielsweise an einer Säule der Kraftfahrzeugkarosserie angebrachten Schließbolzen zu ermöglichen, dass dieser in den Kraftfahrzeugtürverschluss eindringen kann und hier von dem darin realisierten Gesperre aus Drehfalle und Sperrklinke zuverlässig blockiert wird. Das gilt dann auch für die mit dem Kraftfahrzeugtürverschluss verbundene Seitentür, Heckklappe etc.. In diesem Fall wird die meistens in einem

Innenblech der Seitentür vorhandene Aussparung mit Hilfe einer Dichtung abgedichtet, die auf eine Außenoberfläche des Gerätegehäuses, im vorliegenden Fall auf eine Außenoberfläche des KraftfahrzeugtürverschlussGehäuses, aufgebracht wird.

Die An- oder Einbringung solcher Dichtungen bei Gerätegehäusen für ein Kraftfahrzeug stellt besondere Anforderungen an den Herstellungsvorgang. Denn wie bereits beschrieben, muss die Dichtung dauerhaft, typischerweise weit mehr als zehn Jahre, ihre Elastizität behalten und für eine zuverlässige Abdichtung sorgen. Außerdem ist gerade der Kostendruck auf dem Automobilsektor enorm, so dass zugleich preisgünstige Lösungen gefordert werden. - Zwar gibt es im Stand der Technik beispielsweise entsprechend der DE 197 55 497 C1 bereits Ansätze dahingehend, wie ein Steuergerätegehäuse aus Kunststoff für ein Kraftfahrzeug einfach und schnell abgedichtet werden kann. Dazu wird an dieser Stelle auf ein Kunststoffschweißverfahren zurückgegriffen, mit dessen Hilfe Gehäuseboden und Gehäusedeckel des bekannten Gerätegehäuses hermetisch dicht verschlossen werden. Die Kunststoffverschweißung kann durch einen Laserschweißvorgang erreicht werden. Die bekannte Lehre setzt jedoch voraus, dass sowohl der Gehäuseboden als auch der Gehäusedeckel jeweils aus Kunststoff hergestellt sind.

Darüber hinaus beschreibt die EP 0 709 532 A1 einen Schließzylinder für einen Kraftfahrzeugtürverschluss, welcher mit einer Abdeckkappe ausgerüstet ist. An der Abdeckkappe ist eine elastische Dichtung befestigt. Das geschieht mechanisch und nicht adhäsiv.

Die bekannten Vorgehensweisen können nicht in allen Aspekten überzeugen. So kann das Kunststoffschweißverfahren aus der DE 197 55 497 C1 beispielsweise nicht auf ein metallisches Gerätegehäuse ummittelbar übertragen werden. Mit Blick auf die EP 0 709 532 A1 fällt auf, dass mechanische Befestigungsmittel für die Dichtung erforderlich sind. Eine adhäsive Anbringung der Dichtung ist hiermit nicht möglich. Außerdem lassen sich komplizierte dreidimensionale Dichtungsformen auf diese Weise kaum realisieren bzw. einwandfrei mit dem zugehörigen Gerätegehäuse verbinden. Durch die nächstkommende EP 1 331 080 A2 sind ein Verfahren und eine Vorrichtung zur Anbringung eines fließfähigen Materials wie beispielsweise Polyurethan oder Epoxiharz nach einer Vorbehandlung auf einer Oberfläche bekannt geworden. Bei der Oberfläche kann es sich um Komponenten eines Automobiles handeln. Das fließfähige Material dient in diesem Zusammenhang zur Abdichtung, wobei die entsprechend auszurüstende Oberfläche mit einer Wärmequelle vorbehandelt wird, bei der es sich auch um einen Laser handeln kann.

Im Rahmen der DE 100 20 679 A1 werden ein Verfahren und eine Vorrichtung zum Abdichten von Fugen und Nähten in Kraftfahrzeugkarosserien beschrieben. Zu diesem Zweck wird ein Nahtabdichtungsmaterial in und/oder auf Nähten und Fugen appliziert. Das kann mit Hilfe eines Sprühkopfes erfolgen. Vor dem Sprühkopf ist eine Laserlichtquelle vorgesehen, welche zur Reinigung und insbesondere Entfettung der Naht oder Fuge dient.

Die US 6 422 619 B1 beschreibt ein Verfahren zum Aufbringen einer Dichtung, die als Schaumdichtung ausgebildet ist, auf eine Oberfläche eines Kraftfahrzeugtürverschlussgehäuses. Das Dichtungsmaterial wird mit dem Gehäuse verklebt.

Der Erfindung liegt das technische Problem zugrunde, ein derartiges Verfahren so weiter zu entwickeln, dass praktisch beliebige Dichtungsformen realisiert werden können und eine dennoch einwandfreie Haftung des Dichtungsmaterials gewährleistet ist, und zwar unter Umständen auch auf metallischen Oberflächen.

Zur Lösung dieser technischen Problemstellung schlägt die Erfindung ein Verfahren zum Aufbringen einer Dichtung auf eine Oberfläche eines Gerätegehäuses für ein Kraftfahrzeug und insbesondere eine Kraftfahrzeugtürverschluss-Gehäuseoberfläche nach Anspruch 1 vor. Dabei schließt sich an den Reinigungs- und Mikrostrukturierungsvorgang die eigentliche Auf- oder Anbringung der Dichtung an. Denn auf die solchermaßen behandelten Bereiche der Oberfläche wird eine vorzugsweise aushärtende Dichtungsmasse aufgetragen. Dadurch wird die Dichtungsmasse adhäsiv mit der Oberfläche verbunden.

Im Regelfall handelt es sich bei der zu behandelnden Oberfläche des Gerätegehäuses um die Außenoberfläche des fraglichen Gerätegehäuses. Das heißt, die Dichtung wird im Rahmen der Erfindung meistens außenseitig auf das Gerätegehäuse aufgebracht. Auf diese Weise ist das Gerätegehäuse in Verbindung mit der außenseitig definierten Dichtung in der Lage, eine beispielsweise in der Kraftfahrzeugkarosserie vorhandene Öffnung dicht zu verschließen, hinter welcher das Gerätegehäuse platziert bzw. montiert wird. Ein typischer Anwendungsfall besteht darin, dass ein Kraftfahrzeugtürverschluss-Gehäuse als Gerätegehäuse eine in einem Innenblech einer Kraftfahrzeugtür vorhandene und für das Eindringen des Schließbolzens vorgesehene Ausnehmung dicht nach außen verschließt. Hierauf ist die Erfindung selbstverständlich nicht eingeschränkt.

Dabei sieht die Erfindung eine spezielle Vorbehandlung der anschließend mit der Dichtungsmasse auszurüstenden Oberfläche vor. Denn diese Oberfläche wird gereinigt und mikrostrukturiert. Das geschieht mit einer flächenmäßig eingegrenzten Wärmequelle, also einer Wärmequelle, die die Oberfläche nicht vollflächig beaufschlagt, sondern nur in dem Bereich oder in den Bereichen, die anschließend mit der Dichtung ausgerüstet werden. Das heißt, die Oberfläche erfährt lediglich im Bereich der anschließend aufgebrachten Dichtungsmasse die beschriebene Wärmebehandlung. Das wird vorteilhaft mit der flächenmäßig eingegrenzten Wärmequelle erreicht.

Auf diese Weise lässt sich der Herstellungsvorgang bereits äußerst schnell und effizient darstellen, weil nur sehr eng umgrenzte bzw. definierte Bereiche der mit der Dichtung auszurüstenden Oberfläche die beschriebene Behandlung erfahren. Das kann schnell, effizient und kostengünstig mit der flächenmäßig eingegrenzten Wärmequelle erfolgen.

Da meistens die Außenoberfläche des fraglichen Gerätegehäuses die beschriebene Behandlung erfährt, empfiehlt die Erfindung weiter, dass die Wärmequelle oder die fragliche Oberfläche gegeneinander verfahren werden können. Dadurch lassen sich beliebig geformte behandelte Bereiche definieren. Im Regelfall ist eine dreidimensionale Bewegung zwischen einerseits der Wärmequelle und andererseits der zu behandelnden Oberfläche möglich. Das heißt, die Wärmequelle und/oder die Oberfläche vollführen eine gegenseitige dreidimensionale Bewegung. Dadurch lässt sich die Außenoberfläche des Gerätegehäuses mit der fraglichen Wärmequelle praktisch entlang einer beliebigen Konturierung der fraglichen Außenoberfläche, insbesondere auch in drei Dimensionen, behandeln. Auch können auf die Weise variabel gestaltete Gerätegehäuse die gewünschte Bearbeitung erfahren. Meistens ist die Auslegung so getroffen, dass die Wärmequelle die Oberfläche lediglich in einem oberflächennahen Bereich beaufschlagt. Dieser kann beispielsweise bis zu 500 µm Materialtiefe reichen, insbesondere bis zu 100 µm Materialtiefe. Dadurch ist gewährleistet, dass sich das fragliche Gerätegehäuse einerseits nicht besonders stark aufheizt, andererseits keine strukturelle Veränderung erfährt. Denn es werden im Rahmen der beschriebenen Wärmebehandlung tatsächlich nur oberflächennahe Bereiche erfasst. Außerdem kann hierdurch der Energieeintrag in die zu behandelnde Oberfläche begrenzt werden, was wiederum die Kosten minimiert und die Herstellungszeit verringert.

In die gleiche Richtung zielen Maßnahmen der Erfindung dergestalt, dass die Wärmequelle die Oberfläche gepulst bearbeitet. Dabei wird meistens mit kurzen Pulszeiten im Bereich von einer Millisekunde und weniger, das heißt bis in den Nanosekundenbereich, gearbeitet.

Außerdem hat es sich bewährt, wenn als Wärmequelle eine elektromagnetische Strahlungsquelle zum Einsatz kommt, die vorzugsweise im Infrarotbereich und hier im fernen Infrarotbereich (FIR) angesiedelt ist. Tatsächlich empfiehlt es sich, als Wärmequelle einen IR-Laser einzusetzen und hier insbesondere einen CO₂-Laser. Dessen emittiertes Laserlicht weist eine Wellenlänge von ca. 10,6 µm auf und ist damit deutlich oberhalb des sichtbaren Bereiches angesiedelt Dabei werden typischerweise Strahlleistungen von maximal 200 W beobachtet, die für die beschriebenen Anwendungen völlig ausreichend sind.

Außerdem empfiehlt es sich, das emittierte Licht des IR-Lasers bzw. der Wärmequelle bei Bedarf zu fokussieren. Tatsächlich verfügen (CO₂-Laser typischerweise über einen Durchmesser ohne Fokussierung, welcher im Bereich zwischen 3 bis 20 mm angesiedelt ist. Je nach Anwendungsfall und Größe des zu behandelnden Bereiches kann das emittierte Licht des CO₂-Lasers mit oder ohne Fokussierung unmittelbar auf das zu behandelnde Gerätegehäuse gerichtet werden. Dazu wird mit einer Spiegelund/oder Fokussieroptik gearbeitet.

Auf diese Weise wird die Oberfläche des fraglichen Gerätegehäuses chemisch vorbereitet sowie gereinigt und mikrostrukturiert, so dass im Anschluss hieran die Dichtungsmasse aufgetragen werden kann und besonders gut haftet. Das lässt sich im Kern darauf zurückführen, dass durch die erfindungsgemäße Wärmebehandlung die Oberfläche eine Reinigung und Mikrostrukturierung erfährt. Im Zuge des Reinigungsvorganges werden etwaige Flüssigkeitsreste aus vorangeschalteten Herstellungsprozessen meistens schlicht und ergreifend verdampft. Bei diesen Flüssigkeitsresten kann es sich um Wasser, Öl etc. handeln.

Neben der beschriebenen Reinigungswirkung sorgt die Wärmequelle gegebenenfalls auch für eine Mikrostrukturierung der Oberfläche des Gerätegehäuses in der Weise, dass die Oberfläche aufgeraut wird. Außerdem werden insbesondere durch eine Wärmebehandlung bei Oberflächen aus Kunststoff polare Verbindungen freigelegt, die die anschließende Haftung der üblicherweise ebenfalls polaren Dichtungsmasse begünstigen.

Das Gleiche gilt für die Mikrostrukturen, welche die Haftung der Dichtungsmasse erleichtern und begünstigen, und zwar ohne dass zusätzliche Haftvermittler erforderlich sind, die meistens vor dem Aufbringen der Dichtungsmasse aufgetragen werden müssen. Indem solche Haftvermittler erfindungsgemäß wegfallen können, wird die Herstellungszeit verringert und werden Kosten minimiert.

Wie bereits erläutert, kann das von dem typischerweise eingesetzten CO₂-Laser emittierte Licht bedarfsweise fokussiert werden. Dann lassen sich Strahldurchmesser im Bereich von ca. 100 µm bis ca. 10 µm realisieren. Es kann aber auch ohne Fokussierung mit dem unfokussierten Strahldurchmesser gearbeitet werden, welcher im Bereich zwischen 3 mm bis 20 mm angesiedelt ist.

Die Dichtungsmasse wird meistens mit Hilfe einer Spendereinheit auf die solchermaßen behandelten Bereiche der Oberfläche des Gerätegehäuses aufgetragen. Anschließend härtet die Dichtungsmasse im Regelfall aus. Dadurch haftet die Dichtungsmasse adhäsiv auf der Oberfläche. Gleiches gilt für die ausgehärtete Dichtung. Dabei kann die Spendereinheit mit einem Düsenspender ausgelegt sein, so dass die Dichtungsmasse in Gestalt einer Dichtungsraupe auf die zuvor behandelten Bereiche aufgetragen wird.

Als Dichtungsmaterial empfiehlt die Erfindung den Rückgriff auf einen PUR (Polyurethan)-Schaum. Tatsächlich lassen sich solche Polyurethanschaume mit einem weich elastischen bis hart elastischen Charakter auslegen. Im erst genannten Fall werden Shore-A-Härten von maximal bis zu 100 beobachtet, wohingegen eine hart elastische Auslegung zu Shore-D-Härten von ca. 50 und noch mehr führt.

Meistens arbeitet die Erfindung mit einem PUR-Schaum, dessen Shore-A-Härte deutlich unterhalb von 100 angesiedelt ist und welcher über eine besonders ausgeprägte weichelastische Verformbarkeit verfügt, vorzugsweise Shore-A-Härte 50. Das ist für den typischerweise geplanten Einsatzzweck von besonderer Bedeutung, nämlich eine Aussparung in einer Kraftfahrzeugtür oder allgemein einer Kraftfahrzeugkarosserie mit dem dahinter befestigten Gerätegehäuse abzudichten.

Die Anbringung der Dichtungsmasse auf der Außenoberfläche des Gerätegehäuses gelingt auch für den Fall problemlos, dass die fragliche Materialoberfläche nicht materialeinheitlich aus Kunststoff hergestellt wird, sondern beispielsweise materialverschieden auf Basis von Kunststoff und Metall ausgelegt ist. Tatsächlich wird eine solche materialverschiedene Auslegung bei einem Kraftfahrzeugtürverschluss-Gehäuse typischerweise beobachtet. Diese lässt sich darauf zurückführen, dass im Regelfall ein Gehäusedeckel aus Kunststoff gefertigt ist, wohingegen ein mit dem Gehäusedeckel verbundener Schlosskasten aus Stahl hergestellt wird. Um nun ein derartiges Gerätegehäuse bzw. Kraftfahrzeugtürverschluss-Gehäuse auf Basis von Stahl/Kunststoff mit der Dichtungsmasse auszurüsten, erfolgt erfindungsgemäß die Wärmebehandlung unter Rückgriff auf den CO₂-Laser.

Dies gelingt auch und insbesondere für den Schlosskasten aus Stahl, obwohl man aufgrund des metallischen Charakters an dieser Stelle zunächst eine mehr oder minder ausgeprägte Reflexion des emittierten Laserlichtes erwarten würde. Tatsächlich verfügt der fragliche Schlosskasten typischerweise über eine Beschichtung aus bzw. unter Rückgriff auf Zink und Eisen, wodurch die Absorption gegenüber einer metallisch blanken Stahloberfläche bereits deutlich gesteigert ist. Hinzu kommt, dass jede punktuelle Zerstörung der Oberfläche die Absorption aufgrund von Mehrfachreflexion erhöht. Jedenfalls können solche Gerätegehäuse, die zumindest teilweise aus Stahl mit der beschriebenen Zink-Eisenbeschichtung ausgerüstet sind, problemlos mit dem CO₂-Laser vorbehandelt werden. Vergleichbares gilt für Gehäuse aus Stahl, wobei der Stahl eine matte, absorbierende Beschichtung aufweist.

Das gilt erst recht für den Gehäusedeckel respektive ein Gerätegehäuse aus Kunststoff. Hier hat sich als geeigneter Kunststoff POM (Polyoxymethylen) als besonders günstig erwiesen. Derartige Kunststoffe sind typischerweise schwarz eingefärbt und verfügen aus diesem Grund über eine hohe Absorption für die emittierten Infrarotstrahlen und eignen sich besonders für die beschriebene Behandlung.

Im Ergebnis wird ein Verfahren vorgestellt, welches ein besonders kostengünstiges und zugleich funktionsgerechtes Produktionsverfahren darstellt, mit dessen Hilfe eine Dichtung an oder in einem Gerätegehäuse für ein Kraftfahrzeug definiert werden kann. Meistens wird eine Außenoberfläche des fraglichen Gerätegehäuses ganz oder teilweise mit der fraglichen Dichtung ausgerüstet. Zu diesem Zweck wird die fragliche Oberfläche typischerweise einer Wärmebehandlung mit einem C0₂-Laser unterzogen und erfährt in diesem Zusammenhang eine Reinigung und Mikrostrukturierung.

Aufgrund dieser Tatsache lässt sich im Anschluss an diese Vorbehandlung die Dichtungsmasse auf die fragliche Oberfläche unschwer und unmittelbar adhäsiv auftragen, und zwar ohne Haftvermittler. Hierin sind die wesentlichen Vorteile zu sehen.

Im Folgenden wird die Erfindung anhand einer lediglich ein Ausführungsbeispiel darstellenden Zeichnung näher erläutert; es zeigen:

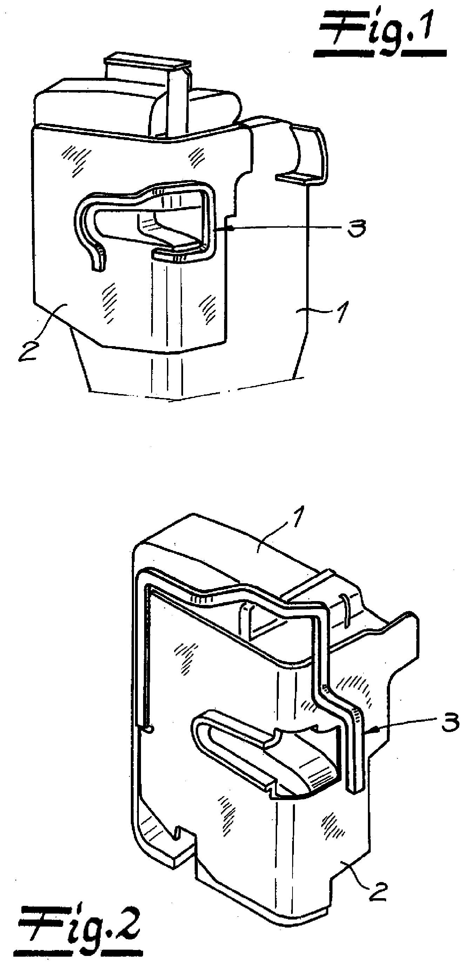

- Fig.1: ein Gerätegehäuse in Gestalt eines Kraftfahrzeugtürverschluss-Gehäuses mit auf einer Außenoberfläche aufgebrachter Dichtung,
- Fig. 2: einen vergleichbaren Gegenstand wie in Fig. 1 in abgewandelter Ausführungsform und
- Fig. 3: eine Vorrichtung schematisch, mit deren Hilfe die Dichtung auf das Kraftfahrzeugtürverschtuss-Gehäuse aufgebracht wird.

In den Figuren ist ein Gerätegehäuse 1, 2 dargestellt. Dieses Gerätegehäuse 1, 2 eignet sich für Kraftfahrzeuge, dient also typischerweise zur innenseitigen Aufnahme von Aggregaten, Motoren etc., die in oder an einem Kraftfahrzeug aufgenommen werden. Im Rahmen des Ausführungsbeispiels ist das Gerätegehäuse 1, 2 als Kraftfahrzeugtürverschluss-Gehäuse 1, 2 ausgelegt.

Das dargestellte Kraftfahrzeugtürverschluss-Gehäuse 1, 2 setzt sich aus einem sogenannten Schlossgehäuse 1 und einem Schlosskasten 2 zusammen. Das Schlossgehäuse 1 ist aus Kunststoff gefertigt, vorliegend aus POM {Polyoxymethylen). Demgegenüber besteht der Schlosskasten 2 aus Stahl und mag zusätzlich über eine Beschichtung verfügen. Diese Beschichtung ist meistens auf Basis von Zink und/oder Eisen hergestellt. Das ist selbstverständlich nicht zwingend.

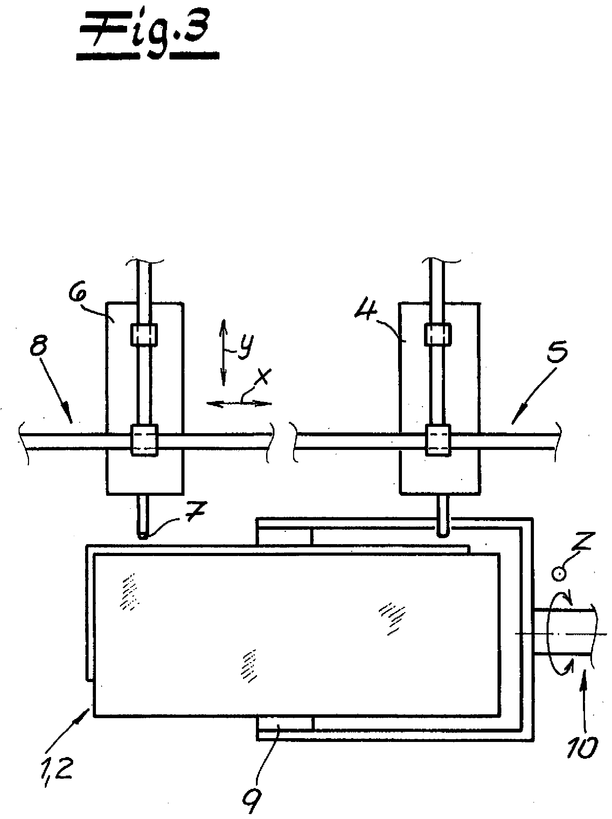

Man erkennt, dass das Gerätegehäuse bzw. Kraftfahrzeugtürverschluss-Gehäuse 1, 2 an seiner Außenoberfläche mit einer Dichtung 3 ausgerüstet ist. Die Dichtung 3 weist eine dreidimensionale Gestalt auf und wird mit Hilfe einer in der Fig. 3 schematisch dargestellten Vorrichtung auf das fragliche Gerätegehäuse bzw. Kraftfahrzeugtürverschluss-Gehäuse 1, 2 aufgebracht. Mit Hilfe der Dichtung 3 wird eine Ausnehmung in einer Kraftfahrzeug-Seitentür abgedichtet, hinter welcher das Kraftfahrzeugtürverschluss-Gehäuse 1, 2 angebracht ist.

In der Fig. 3 erkennt man zunächst einmal eine Wärmequelle 4, die an einer Stellvorrichtung 5 befestigt ist. Im Rahmen des Ausführungsbeispiels lassen sich mit Hilfe der Stellvorrichtung 5 Bewegungen in X- und Y-Richtung vollführen, wie dies durch entsprechende Pfeile in der Fig. 3 angedeutet ist.

Darüber hinaus ist die Vorrichtung zum Aufbringen der Dichtung 3 auf das Gerätegehäuse bzw. Kraftfahrzeugtürverschluss-Gehäuse 1, 2 mit einer Spendereinheit 6 ausgerüstet. Die Spendereinheit 6 verfügt ausgangsseitig über einen oder mehrere Düsenspender 7, mit deren Hilfe Dichtungsmasse auf das Gerätegehäuse bzw. das Kraftfahrzeugtür-Verschluss 1, 2 aufgebracht wird, und zwar nach Maßgabe der gewünschten Form der durch Aushärten hergestellten Dichtung 3.

Wie die Wärmequelle 4 bzw. der an dieser Stelle vorgesehene C02-Laser, so ist auch die Spendereinheit 6 an eine eigene Stellvorrichtung 8 angeschlossen, die - ähnlich wie die Stellvorrichtung 5 - Stellbewegungen in X- und Y-Richtung zulässt. Selbstverständlich können die beiden Stellvorrichtungen 5 und 8 bedarfsweise auch ineinander fallen bzw. deckungsgleich ausgelegt sein oder werden.

Das Gerätegehäuse bzw. Kraftfahrzeugtürverschluss-Gehäuse 1, 2 wird mit Hilfe von Spannfingern 9 gehalten, die Bestandteile einer weiteren Stellvorrichtung 10 sind. Bei dieser Stellvorrichtung 10 mag es sich um eine solche handeln, die überwiegend Rotationen des Gerätegehäuses 1, 2 zulässt und auch eine Bewegung des Gerätegehäuses 1, 2 in Z-Richtung. Das deuten erneut verschiedene Pfeile in der Fig. 3 an.

Auf diese Weise wird erreicht, dass die Wärmequelle 4 und die Oberfläche des Gerätegehäuses 1, 2 eine gegenseitige dreidimensionale Bewegung vollführen. Dadurch können praktisch beliebige Formen und Gestaltungen der Dichtung 3 realisiert werden, indem mit Hilfe der Spendeeinheit 6 beispielsweise eine aushärtende Dichtungsmasse auf die Außenoberfläche des Gerätegehäuses 1, 2 im Beispielfall aufgebracht wird. Dazu dient der wenigstens eine Düsenspender 7.

Diese Funktionsweise ist wie folgt. Zunächst einmal wird die Oberfläche, vorliegend die Außenoberfläche, des Gerätegehäuses 1, 2 mit Hilfe der Wärmequelle 4 beaufschlagt. Dabei wird bzw. ist die Wärmequelle 4 flächenmäßig eingegrenzt. Das lässt sich auf den engumrissenen Durchmesser des Laserstrahls zurückführen, welcher einen Durchmesser im Bereich von 3 mm bis 20 mm ohne Fokussierung aufweist. Indem die Wärmequelle 4 und/oder das Gerätegehäuse 1 , 2 unter Rückgriff auf die jeweils zugehörige Stellvorrichtung 5 respektive 10 gegeneinander dreidimensional bewegt werden, kann der anschließend von der Dichtung 3 abgedeckte Bereich der Außenoberfläche des Gerätegehäuses 1, 2 auf diese Weise behandelt werden. Dadurch erfährt die Oberfläche im Bereich der anschließend aufgebrachten Dichtungsmasse respektive im Bereich der anschließend definierten Dichtung 3 die beschriebene Wärmebehandlung. Außerdem wird die fragliche Oberfläche wie beschrieben gereinigt und mikrostrukturiert.

Anschließend wird auf die solchermaßen behandelten Bereiche der Oberfläche des Gerätegehäuses 1, 2 die aushärtende Dichtungsmasse mit Hilfe der Spendereinheit 6 respektive des Düsenspenders 7 aufgebracht. Dabei lassen sich die Wärmequelle 4 respektive die Spendereinheit 6 und das Gerätegehäuse 1, 2 wie beschrieben gegeneinander verfahren, um beliebig geformte behandelte Bereiche und anschließend auch aufgebrachte Dichtungen 3 definieren zu können.

Die Auslegung ist insgesamt so getroffen, dass die Wärmequelle 4 bzw. der CO₂-Laser im Beispielfall, die Oberfläche des Gerätegehäuses 1, 2 lediglich oberflächennah beaufschlagt. Tatsächlich findet eine Bearbeitung bis lediglich 500 µm und insbesondere 100 µm Materialtiefe beim Gerätegehäuse 1, 2 statt. Der CO₂-Laser arbeitet vorliegend gepulst mit Laserpulsen einer Dauer im Bereich von einer Millisekunde bis zu 10 Nanosekunden. Dabei beträgt die emittierte Wellenlänge ca. 10,6 µm, ist also im nahen Infrarotbereich angesiedelt.

Bei dem Dichtungsmaterial bzw. der anschließend hergestellten Dichtung 3 handelt es sich um einen PUR-Schaum. Dieser wird mit Hilfe des Düsenspenders 7 direkt auf die zuvor unter Rückgriff auf die Wärmequelle 4 behandelte Oberfläche des Gerätegehäuses 1, 2 aufgebracht. Das heißt, ein Haftvermittler oder dergleichen ist nicht unbedingt notwendig. Das gilt selbst für den Fall, dass die Oberfläche und folglich das Gerätegehäuse wie beschrieben materialverschieden ausgelegt sind mit dem Schlosskasten 2 aus Metall bzw. Stahl und dem Schlossgehäuse 1 aus Kunststoff.

## Patentansprüche

1. Verfahren zum Aufbringen einer Dichtung (3) auf eine Oberfläche eines Gerätegehäuses (1, 2) für ein Kraftfahrzeug, insbesondere eine Kraftfahrzeugtürverschluss-Gehäuseoberfläche, mit folgenden Verfahrensschritten:
1.1) die Oberfläche wird zumindest teilweise durch eine flächenmäßig eingegrenzte Wärmequelle (4) gereinigt und mikrostrukturiert;
1.2) die Oberfläche des Gerätegehäuses (1, 2) erfährt lediglich im Bereich einer anschließend aufgebrachten Dichtungsmasse die beschriebene Behandlung;
1.3) auf die solchermaßen behandelten Bereiche der Oberfläche wird die Dichtungsmasse unmittelbar adhäsiv aufgetragen, wobei die Mikrostrukturen die Haftung der Dichtungsmasse erleichtern und begünstigen, ohne dass zusätzliche Haftvermittler erforderlich sind.

2. Verfahren nach Anspruch **1,dadurch gekennzeichnet, dass** die Wärmequelle (4) und/oder die Oberfläche des Gerätegehäuses (1, 2) gegeneinander verfahren werden, um beliebig geformte behandelte Bereiche zu definieren.

3. Verfahren nach Anspruch 1 oder 2 , **dadurch gekennzeichnet, dass** die Wärmequelle (4) und/oder die Oberfläche eine gegenseitige dreidimensionale Bewegung vollführen.

4. Verfahren nach einem der Ansprüche 1 bis 3, **dadurch gekennzeichnet, dass** die Wärmequelle (4) die Oberfläche lediglich in einem oberflächennahen Bereich bis zu beispielsweise 500 µm, insbesondere 100 µm Materialtiefe beaufschlagt.

5. Verfahren nach einem der Ansprüche 1 bis 4, **dadurch gekennzeichnet, dass** die Wärmequelle (4) die Oberfläche gepulst bearbeitet.

6. Verfahren nach einem der Ansprüche 1 bis 5, **dadurch gekennzeichnet, dass** die Wärmequelle (4) als elektromagnetische Strahlungsquelle arbeitet, die vorzugsweise im Infrarotbereich emittiert.

7. Verfahren nach einem der Ansprüche 1 bis 6, **dadurch gekennzeichnet, dass** als Wärmequelle (4) ein Infrarot-Laser, insbesondere CO₂-Laser, eingesetzt wird.

8. Verfahren nach einem der Ansprüche 1 bis 7, **dadurch gekennzeichnet, dass** das von der Wärmequelle (4) emittierte Licht fokussiert wird, beispielsweise auf Strahldurchmesser im Bereich von ca. 100 µm bis ca. 10 mm.

9. Verfahren nach einem der Ansprüche 1 bis 8, **dadurch gekennzeichnet, dass** die Dichtungsmasse mit Hilfe eines Düsenspenders (7) in Gestalt einer Dichtungsraupe auf die zuvor behandelten Bereiche aufgetragen wird.

10. Verfahren nach einem der Ansprüche 1 bis 9, **dadurch gekennzeichnet, dass** als Dichtungsmaterial ein PUR-Schaum, regelmäßig ohne zusätzliche Hilfsmittel, direkt auf die behandelte Oberfläche des Gerätegehäuses (1, 2) aufgebracht wird.

11. Verfahren nach einem der Ansprüche 1 bis 10, **dadurch gekennzeichnet, dass** die Oberfläche des Gerätegehäuses (1, 2) materialeinheitlich oder materialverschieden, beispielsweise auf Basis von Kunststoff und Metall, ausgelegt ist.

## Claims

1. Method for applying a seal (3) to a surface of a device housing (1, 2) for a motor vehicle, in particular a motor vehicle door lock housing surface, comprising the following method steps:
1.1) the surface is at least partly cleaned and microstructured by a heat source (4) having a two-dimensionally delimited surface area;
1.2) the surface of the device housing (1, 2) is subjected to the treatment described only in the region of a sealing compound that is applied subsequently;
1.3) the sealing compound is applied directly by adhesion to the surface regions that have been treated in this manner, wherein the microstructures facilitate the adhesion of the sealing compound without the need for additional bonding agents.

2. Method according to Claim 1, **characterized in that** the heat source (4) and/or the surface of the device housing (1, 2) are moved against each other to define treated regions of any shape.

3. Method according to Claim 1 or 2, **characterized in that** the heat source (4) and/or the surface perform a reciprocal movement in three dimensions.

4. Method according to any one of Claims 1 to 3, **characterized in that** the heat source (4) impinges on the surface only in a near-surface region to a material depth as far as 500 µm, particularly 100 µm, for example.

5. Method according to any one of Claims 1 to 4, **characterized in that** the heat source (4) acts on the surface in pulsed mode.

6. Method according to any one of Claims 1 to 5, **characterized in that** the heat source (4) operates as an electromagnetic radiation source which preferably emits in the infrared range.

7. Method according to any one of Claims 1 to 6, **characterized in that** an infrared laser, particularly a CO₂ laser is used as the heat source (4).

8. Method according to any one of Claims 1 to 7, **characterized in that** the light emitted by the heat source (4) is focussed to a beam diameter in the range from about 100 µm to about 10 mm, for example.

9. Method according to any one of Claims 1 to 8, **characterized in that** the sealing compound is applied to the pretreated regions in the form of a sealing bead by means of a dispensing nozzle (7).

10. Method according to any one of Claims 1 to 9, **characterized in that** a PUR foam is applied directly to the treated surface of the device housing (1, 2) regularly without any additional auxiliary agents.

11. Method according to any one of Claims 1 to 10, **characterized in that** the surface of the device housing (1, 2) is designed to consist of the same material or of different materials, having a plastic and a metal base, for example.

## Revendications

1. Procédé pour appliquer un joint d'étanchéité (3) sur une surface d'un boîtier d'appareil (1, 2) pour un véhicule automobile, notamment une surface de boîtier de fermeture de porte de véhicule automobile, avec les étapes de procédé suivantes :
1.1) la surface est nettoyée et microstructurée au moins en partie par une source de chaleur (4) délimitée en fonction de la surface,
1.2) la surface du boîtier d'appareil (1, 2) ne subit le traitement décrit que dans la zone d'une masse d'étanchéité appliquée ultérieurement,
1.3) la masse d'étanchéité est appliquée directement de façon adhésive sur les zones ainsi traitées, les microstructures facilitant et favorisant l'adhérence de la masse d'étanchéité sans que des agents adhésifs supplémentaires soient nécessaires.

2. Procédé selon la revendication 1, **caractérisé en ce que** la source de chaleur (4) et/ou la surface du boîtier d'appareil (1, 2) sont déplacées l'une contre l'autre pour définir des zones traitées conformées de façon quelconque.

3. Procédé selon la revendication 1 ou 2, **caractérisé en ce que** la source de chaleur (4) et/ou la surface exécutent un mouvement tridimensionnel réciproque.

4. Procédé selon la revendication 1 à 3, **caractérisé en ce que** la source de chaleur (4) ne sollicite la surface que dans une zone proche de la surface jusqu'à par exemple 500 µm, notamment 100 µm de profondeur du matériau.

5. Procédé selon l'une quelconque des revendications 1 à 4, **caractérisé en ce que** la source de chaleur (4) traite la surface de façon pulsée.

6. Procédé selon l'une quelconque des revendications 1 à 5, **caractérisé en ce que** la source de chaleur (4) fonctionne comme source de chaleur rayonnante électromagnétique, qui émet de préférence dans une plage infrarouge.

7. Procédé selon l'une quelconque des revendications 1 à 6, **caractérisé en ce qu'**un laser infrarouge, notamment un laser CO₂, est utilisé comme source de chaleur (4).

8. Procédé selon l'une quelconque des revendications 1 à 7, **caractérisé en ce que** la lumière émise par la source de chaleur (4) est concentrée, par exemple sur un diamètre de rayonnement dans une plage d'environ 100 µm à environ 10 mm.

9. Procédé selon l'une quelconque des revendications 1 à 8, **caractérisé en ce que** la masse d'étanchéité est appliquée à l'aide d'un distributeur à buse (7) sous la forme d'un cordon d'étanchéité sur les zones préalablement traitées.

10. Procédé selon l'une quelconque des revendications 1 à 9, **caractérisé en ce qu'**une mousse de polyuréthane est appliquée en tant que masse d'étanchéité, régulièrement sans agents auxiliaires supplémentaires, directement sur la surface traitée du boîtier d'appareil (1, 2).

11. Procédé selon l'une quelconque des revendications 1 à 10, **caractérisé en ce que** la surface du boîtier d'appareil (1, 2) est conçue dans le même matériau ou en matériaux différents par exemple à base de matière plastique et de métal.
